Europäisches Patentamt

**(19)** European Patent Office

Office européen des brevets

**(11)** **EP 0 696 937 B1**

**(12)** # EUROPEAN PATENT SPECIFICATION

**(45)** Date of publication and mention
of the grant of the patent:
**18.06.1997 Bulletin 1997/25**

**(21)** Application number: **94915848.9**

**(22)** Date of filing: **21.04.1994**

**(51)** Int. Cl.⁶: $B01J\ 33/00$, $B01J\ 37/20$, $C10G\ 49/02$

**(86)** International application number:
**PCT/US94/04394**

**(87)** International publication number:
**WO 94/25157 (10.11.1994 Gazette 1994/25)**

**(54)** **A METHOD OF TREATING SPONTANEOUSLY COMBUSTIBLE CATALYSTS**

METHODE ZUR BEHANDLUNG VON SPONTAN BRENNBAREN KATALYSATOREN

PROCEDE DE TRAITEMENT DE CATALYSEURS A COMBUSTION SPONTANEE

**(84)** Designated Contracting States:
**BE DE DK ES FR GB IT LU NL**

**(30)** Priority: **04.05.1993 US 57596**
**01.04.1994 US 219163**

**(43)** Date of publication of application:
**21.02.1996 Bulletin 1996/08**

**(73)** Proprietor: **CRI INTERNATIONAL, INC.**
**Houston, TX 77060 (US)**

**(72)** Inventors:
• **SEAMANS, James, Dallas**
**The Woodlands, TX 77381 (US)**
• **PARTIN, John, Alexander**
**The Woodlands, TX 77381 (US)**

• **SAMONTE, Edward, Roy**
**Lafayette, LA 70508 (US)**
• **LOCKEMEYER, John, Robert**
**Sugar Land, TX 77479 (US)**

**(74)** Representative: **Ellis-Jones, Patrick George**
**Armine**
**J.A. KEMP & CO.**
**14 South Square**
**Gray's Inn**
**London WC1R 5LX (GB)**

**(56)** References cited:
**EP-A- 0 249 849**      **EP-A- 0 447 221**
**FR-A- 1 555 015**      **GB-A- 2 208 357**
**GB-A- 2 246 083**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

This invention relates to a method of treating spontaneously combustible catalysts and catalyst compositions resulting from such treatment. In one aspect, the invention relates to a process for preparing catalysts that produces catalyst compositions with reduced self-heating characteristics. In another aspect, the invention relates to hydrotreating and/or hydrocracking processes.

A spontaneously combustible catalyst is any catalyst composition which has a tendency to self-heat or combust in the presence of air or oxygen at a temperature of 200°C or lower. Particularly, many hydrocarbon processing catalysts, such as hydrotreating, hydrocracking and tail-gas treating catalysts which typically contain sulfur and reduced catalysts such as hydrogenation catalysts can be classified as spontaneously combustible catalysts. Some of the hydrocarbon processing catalysts can also be reduced catalysts.

A hydrotreating catalyst is used to catalyze the hydrogenation of hydrocarbon feedstocks, and most particularly to hydrogenate particular components of the feedstock, such as sulfur-, nitrogen- and metals-containing organo-compounds and unsaturates. A hydrocracking catalyst is used to crack large and complex petroleum derived molecules to attain smaller molecules with the concomitant addition of hydrogen to the molecules. Such hydrocracking catalyst includes catalysts used for residue conversion units. A tail gas catalyst is used to catalyze the conversion of hazardous effluent gas streams to less harmful products, and most particularly to convert oxides of sulfur to hydrogen sulfide which can be recovered and readily converted to elemental sulfur. A reduced catalyst is any catalyst that contains a metal in the reduced state such as an olefin hydrogenation catalyst. Such metals are typically reduced with a reducing agent such as hydrogen or formic acid. The metals on these reduced catalyst may be fully reduced or partially reduced.

Hydrogenation catalysts are well known and several are commercially available. Typically, the active phase of the catalyst is based on at least one metal of group VIII, VIB, IVB, IIB or IB of the periodic table, typically Pt, Pd, Ru, Ir, Rh, Os, Fe, Co, Ni, Cu, Mo, W, Ti Hg, Ag or Au, usually supported on a support such as alumina, silica, silica-alumina or carbon. Such reduced catalysts can be spon-taneously combustible.

Catalyst compositions for hydrotreating and/or hydrocracking or tail gas treating are well known and several are commercially available, in particular metal oxide catalysts including cobalt-molybdenum, nickel-tungsten, and nickel-molybdenum, usually supported on alumina, silica and/or silica-alumina, including zeolites and carriers. Other transition metal element catalysts may be employed for these purposes, including those containing at least one of V, Cr, Mn, Re, Co, Ni, Cu, Zn, Mo, W, Rh, Ru, Os, Ir, Pd, Pt, Ag, Au, Cd, Sn, Sb, Bi and Te.

For maximum effectiveness the metal oxide catalysts are converted at least in part to metal sulfides. The metal oxide catalysts can be sulfided in the reactor by contact at elevated temperatures with hydrogen sulfide or a sulfur-containing oil or feed stock ("in-situ").

However, it is advantageous to the user to be supplied with metal oxide catalysts having sulfur, as an element or in the form of an organo-sulfur compound, incor-porated therein. These presulfurized catalysts can be loaded into a reactor and brought up to reaction conditions in the presence of hydrogen causing the sulfur or sulfur compound to react with hydrogen and the metal oxides thereby con-verting them into sulfides without any additional process steps. These presulfurized catalysts provide an economic advantage and avoid many of the hazards such as flammability and toxicity, which the plant operator encounter when using hydrogen sulfide, liquid sulfides, polysulfides and/or mercaptans to sulfide the catalysts.

Several methods of presulfurizing metal oxide catalysts are known. Hydrotreating catalysts have been presulfurized by incorporating sulfur compounds into a porous catalyst prior to hydrotreating a hydrocarbon feedstock, using, for example, organic polysulfides, or elemental sulfur in which case hydrogen is used as a reducing agent to convert the elemental sulfur to hydrogen sulfide in situ. U.S.-A-4,943,547 discloses subliming elemental sulfur into the pores of the catalyst then heating the sulfur-catalyst mixture to a temperature above the melting point of sulfur in the presence of hydrogen which activates the catalysts. WO-A-93/02793 discloses a method where elemental sulfur is incorporated in a porous catalyst and at the same time or subsequently the catalyst is treated with a liquid olefinic hydrocarbon.

However, these ex-situ presulfurized catalysts, which are spontaneously combustible and may be pyrophoric or self-heating, these two groups differing in the degree of spontaneous combustion, must be transported to the user or plant operator. Pyrophoric substances ignite, even in small quantities, within five minutes of coming into contact with air whereas self-heating substances ignite in air only when in large quantities and after long periods of time. Pyrophoric substances are typically classified as Division 4.2 Packing Group I and self-heating substances are classified in either Packing Group II or Packing Group III according to the test procedures recommended in the Dangerous Goods Special Bulletin, April 1987, published by TDG Ottawa, Transport Canada for Class 4, Division 4.2. These spontaneously combustible substances must be packaged in a United Nations designated 250 kg metal drum or in a smaller package of 100 kg plastic fibre drum or even smaller.

It is clearly desirable to transport these presulfurized catalysts in larger quantities such as in flow bins or super-sacks but they must pass the test for spontaneously combustible substances.

EP-A-447,221 discloses a method of presulfiding a hydrotreating or hydrocracking catalyst which minimises stripping upon start-up of a hydrotreating or hydrocracking reactor utilizing such a catalyst.

Further, some of the prior art ex-situ methods of presulfurizing supported metal oxide catalysts have suffered from excessive stripping of sulfur upon start-up of a hydrotreating reactor in the presence of a hydrocarbon feedstock. As a result decrease in catalyst activity or stability is observed and there can be fouling of downstream equipment.

Therefore, it is an object of the present invention to treat spontaneously combustible catalysts in a manner to suppress their self-heating properties.

The present invention provides a composition comprising a presulfurized or sulfided catalyst and which is supported on a porous support, at least a portion of which has been coated with a substance comprising at least one oxygen-containing hydrocarbon having at least 16 carbon atoms with the proviso that when the hydrocarbon is a fatty acid triglyceride the catalyst has not been coated and/or impregnated with it prior to or at the same time as the catalyst is presulfurised or sulfided; this can be achieved by contacting the catalyst with the oxygen-containing hydrocarbon at a temperature of at least 0°C. Such composition has a reduced self-heating characteristic when compared to the spontaneously combustible catalyst which has not been coated.

Further, the present invention also provides an improved method of presulfurizing a sulfidable metal or metal oxides(s)-containing catalyst which suppresses self-heating characteristics, which comprises:

(a) contacting said catalyst with elemental sulfur, a sulfur compound or a mixture thereof at a temperature such that at least a portion of said sulfur or sulfur compound is incorporated in the pores of said catalyst by impregnation, sublimation and/or melting; and
(b) prior to, at the same time or subsequently contacting said catalyst particles in the presence of an oxygen-containing hydrocarbon having at least 16 carbon atoms.

The method is particularly suitable for application to hydrotreating and/or hydrocracking or tail gas treating catalysts, for hydrocracking hydrocarbon streams.

Furthermore, the present invention provides a method of unloading a presulfurized or sulfided catalyst during a halt in the operation of the reactor wherein the catalyst in the reactor is contacted with a mixture comprising an oxygen-containing hydrocarbon having at least 16 carbon atoms prior to unloading.

It has been found that by treating a spontaneously combustible catalyst by contacting with an oxygen-containing hydrocarbon having at least 16 carbon atoms, the resulting catalyst has suppressed self-heating characteristics, in general, such that it is no longer classified as spontaneously combustible. Thus, the process allows an otherwise spontaneously combustible catalyst to be transported or shipped in any suitable packaging such as flow-bins, super-sacks, or sling-bins for example.

As used herein, a "spontaneously combustible catalyst(s)" is any heterogeneous or solid metal(s)-, metal oxide(s)-, metal sulfide(s)- or other metal compound(s)- containing catalyst, which is on a support which can be classified as a spontaneously combustible substance according to the test procedures recommended in the Dangerous Goods Special Bulletin, April 1987, published by TDG Ottawa, Transport Canada for Class 4, Division 4.2 or has an onset of exotherm below 200°C as measured by the self-heating ramp test described below. The terms "metal(s)-", "metal oxide(s)-" and "metal sulfide(s)-" containing catalysts include catalyst precursors that can be used as catalysts after further treatment or activation. Further, the term "metal(s)" includes metal(s) in partially oxidized form. The term "metal oxide(s)" includes metal oxide(s) in partially reduced form. The term "metal sulfide(s)" includes metal sulfide(s) that are partially sulfided as well as totally sulfided metals.

It is understood that while the normal catalyst preparative techniques will produce metal oxide(s), it is possible to utilize special preparative techniques to produce the catalytic metals in a reduced form, such as the zero valent state. Since metals in the zero valent state will be sulfided as well as the oxides when subjected to sulfiding conditions, catalysts containing such sulfidable metals even in reduced or zero valent states will be considered as "sulfidable metal oxide catalyst(s)". Also the process of the instant invention can be applied to regenerated catalysts which may have the metal sulfide not completely converted to the oxides.

Other components such as carbides, borides, nitrides, oxyhalides, alkoxides and alcoholates can also be present.

In one embodiment of the present invention, a presulfurized or sulfided catalyst which has a tendency to self-heat or combust in the presence of air or oxygen at a temperature of 200°C or lower and which catalyst is supported on a porous support, is contacted with at least one oxygen-containing hydrocarbon at a temperature of at least about 0°C, preferably at least 15°C to 350°C, and more preferably 20°C to 150°C. Upon contact, the oxygen-containing hydrocarbon is impregnated into the catalyst so that the surface of the catalyst is coated with the oxygen-containing hydrocarbon. For the purpose of definition, the surface of the catalyst includes the external surface of the catalyst as well as the internal pore surfaces of the catalyst. The word "coating" does not rule out some reaction as defined below.

The mechanism by which the oxygen-containing hydrocarbon suppresses the self-heating characteristics of the spontaneously combustible catalysts is not known and will be referred to, for convenience as "reaction" or "reacts". The suppressed self-heating result can be readily determined without undue experimentation by measuring the exothermic onset temperatures for a specific rising temperature profile of catalysts subjected to differing temperature/time treatments with and without the oxygen-containing hydrocarbon, as shown below.

When sulfur-containing catalysts are treated their sulfur retention or activity is not substantially compromised. The sulfided catalysts can be catalysts sulfided by an in-situ presulfiding method or an ex-situ presulfiding or presulfurizing method. Such catalysts can be fresh or oxy-regenerated, for example, those disclosed in U.S.-A-4,530,917; 4,177,136; 4,089,930; 5,153,163; 5,139,983; 5,169,819; 4,530,917 or 4,943,547 or WO-A-93/02793, or reduced hydrogenation catalyst such as disclosed in U.S. Patent No. 5,032,565.

The treatment can also be applied prior to, at the same time or subsequent to presulfurizing a presulfidable metal or metal oxide catalyst. Preferably the catalyst is heated after contacting with elemental sulfur or a sulfur compound at an elevated temperature and time sufficient to fix the sulfur onto the catalyst. Such heating process can be before or after treatment with the oxygen-containing hydrocarbon.

Generally, the catalysts of the present invention also have enhanced resistance to sulfur stripping during startup in a hydrotreating and/or hydrocracking reactor in the presence of a hydrocarbon feedstock. The mechanism by which this occurs is not known and will be referred to for convenience as "reaction" or "reacts". A suitable method for determining sulfur stripping resistance is described below wherein toluene is used as stripping agent.

Further, for reasons unknown for elemental sulfur-incorporated catalysts, the percent retention of sulfur is generally improved by the treatment, particularly for some high-pore volume catalysts.

There are three general methods for carrying out the presulfurising process.

In the first method porous catalyst particles are contacted with elemental sulfur or sulfur compounds or mixtures thereof so as to cause the sulfur or sulfur compounds to be incorporated into the pores of the catalyst by impregnation, by sublimation, by melting or by a combination thereof to produce "sulfur-incorporated catalysts."

The sulfur-incorporated catalyst particles are contacted with the oxygen-containing hydrocarbon at temperatures and times sufficient to cause the catalyst particles to exhibit suppressed self-heating properties.

When using elemental sulfur, the catalyst is contacted at a temperature such that the elemental sulfur is substantially incorporated in the pores of the catalyst by sublimation and/or melting. While the catalyst particles can be contacted with sulfur in the molten state, it is preferred to first admix the catalyst particles with powdered elemental sulfur and then heat the mixture to above the temperature at which sublimation of the sulfur occurs.

Generally the catalyst particles are heated in the presence of the powdered elemental sulfur at a temperature greater than about 80°C. Typically the catalyst and powdered sulfur are placed in a vibratory or rotary mixer and heated to the desired temperature for sufficient time, typically 0.1 to 10 hours or more, to allow for the incorporation.

Preferably the sulfur impregnation step is carried out at 90°C to 130°C or higher, up to the boiling point of sulfur (about 445°C). The lower temperature limit is fixed by the sublimation/melting characteristics of sulfur under the specific conditions of impregnation, whereas the upper temperature limit is fixed primarily by economics, higher temperatures being more costly to produce as well as more difficult to work with.

The sulfur-incorporated catalyst is then treated with the oxygen-containing hydrocarbon, as discussed below.

The sulfur-incorporated catalyst may be further heated before and/or after the oxygen-containing hydrocarbon treatment at a temperature greater than about 150°C, preferably from 175°C to 350°C and more preferably from 200°C to 325°C, to fix the incorporated-sulfur onto the catalyst.

Preferred sulfur compounds include, for example, ammonium sulfide, organic mono-, di- and poly-sulfides, dialkyl sulfoxides and compounds derived from these upon heating or reduction in the presence of the sulfidable metal oxide and mixtures thereof. Examples of organic sulfides include poly-sulfides of general formula R-S(n)-R' or HO-R-S(n)-R-OH wherein n is an integer from 3 to 20 and R and R' are independently organic radicals of 1 to 50 carbon atoms such as ditert dodecyl polysulfide and diethanol disulfide; mercaptoalcohols such as 2-mercaptoethanol; alkylmercaptans such as n-butyl mercaptan; thioglycols such as dithiopropyleneglycol; dialkyl or diaryl sulfides such as di-n-butyl sulfides and diphenyl sulfides; dialkylsulfoxides such as dimethyl sulfoxide; and mixtures thereof.

Before use, the sulfur compounds are typically impregnated with an aqueous or organic solution such as a hydrocarbon or non-hydrocarbon equivalent to light gasoline, hexane or gasoline of white spirit type, for example as described in U.S.-A-5,153,163; 5,139,983; 5,169,819; and 4,530,917. The resulting catalysts are typically reduced by hydrogen, or other organic reducing agent such as formic acid, methyl formate, ethyl formate, acetaldehyde or methyl alcohol. The sulfur compound-incorporated catalyst can be treated with the oxygen-containing hydrocarbon before and/or after the reduction step under conditions described above for the elemental sulfur-incorporated catalyst.

In the second method, a porous sulfidable metal oxide-containing catalyst is contacted with a mixture of powdered elemental sulfur and/or a sulfur compound and the oxygen-containing hydrocarbon, preferably while heating the resultant mixture to a temperature above about 80°C.

In this embodiment, the catalyst particles are contacted with the elemental sulfur, preferably powdered, and/or at least one sulfur compound and the oxygen-containing hydro-carbon simultaneously. Other hydrocarbons such as olefins can be optionally added simultaneously. A mixture of powdered elemental sulfur and/or sulfur compound and oxygen-containing hydrocarbon is first produced. When elemental sulfur is used, the ratio of hydrocarbon to sulfur by weight is typically from 1:2 to 30:1, preferably from 1:1 to 6:1. The mixture may be heated to promote homogeneity, particularly if the hydrocarbon is not liquid at ambient conditions or the mixture may be a suspension. Toluene or other light weight hydrocarbon solvents may be added to decrease the viscosity of the mixture. Increased heat will achieve the same effect. When a sulfur compound is used as the source of sulfur, the ratio of hydrocarbon to sulfur compound by weight is typically from 1:2 to 30:1. The mixture is then added to a preweighed catalyst sample and mixed. When a mixture of elemental sulfur and sulfur compound is used as the source of sulfur, a ratio of hydrocarbon to total sulfur and by weight from 1:2 to 30:1 is suitable.

When, elemental sulfur is at least partially used, the mixture is then heated to incorporate sulfur at a temperature of above about 80°C. The times and temperature can be the same as in for the first embodiment. When sulfur compounds are used the catalyst can be reduced as above for the first embodiment.

In the third method, a porous sulfidable metal oxide-containing catalyst is first contacted with the oxygen-containing hydrocarbon before the presulfurization step. The resultant mixture can be optionally heated to a temperature above about room temperature (i.e. about 25°C) for a solid or semi-solid hydrocarbon to allow it to impregnate the catalyst. The catalyst and/or oxygen-containing hydrocarbon is preferably heated to at least a temperature where the hydrocarbon becomes liquid or semi-fluid. The hydrocarbon treated catalyst is then presulfurized by contacting with elemental sulfur and/or sulfur compound as described for the first method. Optionally, the hydrocarbon-treated presulfurized catalyst can be heated during the sulfurization step or after impregnation of sulfur compounds regardless of prior heat-treatment. The catalyst should preferably be heated at some point after contacting with the sulfur at a temperature above about 150°C so as to fix the sulfur on the catalyst.

The catalyst is preferably treated with the oxygen-containing hydrocarbon after sulfur and/or sulfur compound incorporation for superior suppression of self-heating characteristics. If the sulfur and/or sulfur compound and the hydrocarbon are contacted with the metal or metal oxide(s) catalyst simultaneously, it is preferable that the catalyst is contacted in such a manner which allows the sulfur and/or sulfur compounds to be incorporated or impregnated into the pores of the catalyst prior to the catalyst reacting or being coated with the hydrocarbon at a temperature of above 80°C.

In any of the above methods the amounts of sulfur or sulfur compounds used will depend upon the amounts of catalytic metal present in the catalyst. Typically the amount used is determined on the basis of the stoichiometric amount of sulfur or sulfur compounds required to convert all of the metal on the catalyst to the sulfide form. For example a catalyst containing molybdenum would require two moles of sulfur or mono-sulfur compounds to convert each mole of molybdenum to molybdenum disulfide. On regenerated catalysts, existing sulfur levels may be factored into the calculations for the amounts of elemental sulfur required.

It has been found that the addition of presulfurizing sulfur in amounts down to about 50 percent of the stoichiometric requirement results in catalysts having enhanced hydrodenitrification activity, which is an important property of hydrotreating and first stage hydrocracking catalysts. Thus, the amount of presulfurizing sulfur used for incorporation into the catalyst will typically be from 0.2 to 1.5 times, and preferably from about 0.4 to about 1.2 times the stoichiometric amount.

For hydrotreating/hydrocracking and tail gas treating catalysts containing Group VIB and/or Group VIII metals the amount of presulfurizing sulfur employed is typically 2% to 15%, and most preferably, 6% to 12%, by weight of the catalyst charged. It is preferred not to add so much sulfur or sulfur compound to the catalyst that the pores are completely filled up. By leaving residual pore volume, the oxygen-containing hydrocarbon can penetrate the pores and react therein.

The key step in the present invention is to contact the catalyst with an oxygen-containing hydrocarbon having at least 16 carbon atoms for a sufficient time such that the hydrocarbon impregnates (or reacts) with the catalyst and provides a catalyst that is less spontaneously combustible and, for a sulfurised catalyst, is more resistant to sulfur leaching than one not contacted with the hydrocarbon. Typically the contact temperature is greater than about 0°C, desirably from 15°C to 350°C, preferably from 20°C to about 150°C. The contact temperature will vary depending on the melting point or sublimation temperature of the hydrocarbon. For example, when the oxygen-containing hydrocarbon is a solid or a semi-solid such as lard, the temperature should preferably be at least as high as the melting point for a time sufficient for the catalyst to flow freely (appear "dry" and not stick or clump), i.e. it is liquid or semi-fluid, to enable the hydrocarbon to coat and/or impregnate the catalyst. Lard, for example, is preferably contacted at a initial temperature of about 80°C. The process temperature can be readily determined by the melting point of the solid or semi-solid at a given pressure environment or visually by checking if the oxygen-containing hydrocarbon flows. Contact times will depend on temperature and the viscosity of the oxygen-containing hydrocarbon, higher temperatures requiring shorter times and higher viscosity requiring longer times. In general times will range from 2 minutes to 2 hours or more.

Preferably the oxygen-containing hydrocarbon is sufficiently flowable or sublimable to give sufficient contact with the catalyst. A hydrocarbon which is liquid at the elevated temperature of contact is more preferred for ease of handling. It is preferred that the hydrocarbon is a higher hydrocarbon, i.e., one having greater than twelve, preferably greater than sixteen, and more preferably greater than twenty carbon atoms. The upper carbon number is determined by the melting point, solidification point, or smoke point of the hydrocarbon in question. While solid fatty oxygen-containing hydrocarbon having carbon numbers greater than 100 can be used, they are inconvenient since they must be heated to such a high temperature in order to be converted into a liquid, although they can be used with a solvent. Hydrocarbons with carbon numbers from 16 to 100, preferably from 16 to 80 are found most useful.

The term "oxygen-containing hydrocarbon" as used herein refers to hydrocarbon molecules containing at least one oxygen atom, which includes, for example, acids, acid esters, alcohols, aldehydes, ketones and ethers. Mixtures may be used such as acid esters and alcohols, and different acid esters. It can be primary, secondary or tertiary, straight or branched chain, cyclic, acyclic or aromatic, saturated or unsaturated. Preferably, the hydrocarbon moiety contains at least some unsaturation for superior activity as a hydrotreating, hydrocracking or tail gas treating catalyst, typically an unsaturated fatty acid ester. The term "unsaturated" as used herein refers to hydrocarbon molecules containing at least one carbon-carbon double bond or compound(s) containing some carbon-carbon double bond and will have an iodine value of at least 60 measured by standard iodine measuring techniques such as American Oil Chemist Society (AOCS) Official Method Cd 1-25 or IUPAC Method 2.205 described in International Union of Pure and Applied Chemistry, 7th ed., Blackwell Scientific Publications 1987 or any other standard iodine measuring techniques. The term "saturated" as used herein refers to oxygen-containing hydrocarbon compounds containing no carbon-carbon double bonds or compound(s) containing minimal carbon-carbon double bonds and have a iodine value of less than 60 measured by AOCS Official Method Cd 1-25, IUPAC Method 2.205 or any other standard iodine measuring techniques.

Preferred hydrocarbons include those having at least 16, preferably 20 carbon atoms for example,higher alcohols such as dodecanol, hexadecanol, farnesol, hexestrol, oleyl alcohol, cetyl alcohol, hexacosanol, triacontanol, cocceryl alcohol and octacosanol; higher ethers such as dicetyl ether; higher ketones such as palmitone, 10-hydroxypalmitone and 3-octadecanone; higher aldehydes such as palmitaldehyde and olealdehyde; higher acids such as saturated acids such as lauric, myristic, palmitic, stearic, and docosanoic acids or unsaturated higher acids such as palmitoleic, oleic, linoleic, linolenic, eleostearic, ricinoleic, eicosenoic, docosenoic, eicosatetraenoic, eicosapentaenoic, decosapentaenoic, and docosahexaenoic; higher acids esters including mono-, di-, tri- and poly-fatty acid esters alkyl and aryl esters of the above acids (e.g. benzyl oleate and butyl oleate) and esters of the above acids with mono-glycerides, di-glycerides and triglycerides and mixtures thereof. Glyceride fatty acid esters having from 16 to 100, more preferably 18 to 90, most preferably 20 to 80 carbon atoms are preferred.

Examples of commercial glyceride fatty acid esters include soybean oil, linseed oil, safflower oil, corn oil, sunflower oil, cottonseed oil, olive oil, tung oil, castor oil, rapeseed oil, tall oil, peanut oil, coconut oil, palm oil, canbra oil, perilla oil, lard, tallow, marine fat or oil such as fish fat or oil (e.g. herring and sardine), vegetable residues and mixtures thereof. Some examples of commercial higher alcohols includes alkanol mixtures such as NEODOL alcohols (Shell Chemical Company), including mixtures of $C_9$,$C_{10}$ and $C_{11}$ alkanols (NEODOL 91), mixtures of $C_{12}$ and $C_{13}$ alkanols (NEODOL 23), mixtures of $C_{12}$, $C_{13}$, $C_{14}$ and $C_{15}$ alkanols (NEODOL 25), and mixtures of $C_{14}$ and $C_{15}$ alkanols (NEODOL 45); the ALFOL Alcohols (Vista Chemical Company), including mixtures of $C_{10}$ and $C_{12}$ alkanols (ALFOL 1012), mixtures of $C_{12}$ and $C_{14}$ alkanols (ALFOL 1214), mixtures of $C_{16}$ and $C_{18}$ alkanols (ALFOL 1618) and mixtures of $C_{16}$, $C_{18}$, and $C_{20}$ alkanols (ALFOL 1620); the EPAL Alcohols (Ethyl Chemical Company), including mixtures of $C_{10}$ and $C_{12}$ alkanols (EPAL 1012), mixtures of $C_{12}$ and $C_{14}$ alkanols (EPAL 1214) and mixtures of $C_{14}$, $C_{16}$, and $C_{18}$ alkanols (EPAL 1418); and the TERGITOL-L Alcohols (from Union Carbide Corporation), including mixtures of $C_{12}$, $C_{13}$, $C_{14}$ and $C_{15}$ alkanols (TERGITOL-L 125). Suitable commercially available alkanols prepared by the reduction of naturally occurring fatty acid esters include, for example, the CO and TA products of Procter and Gamble Company and the TA alcohols of Ashland Oil Company. Higher oligomers and polymers of polyols such as alkylene glycols are also suitable as higher alcohols.

Optionally, the oxygen-containing hydrocarbon treated catalyst can be further treated with or simultaneously treated with, or treated prior to the hydrocarbon treatment with olefins to enhance catalytic activity in hydrocracking, hydrotreating or tail gas treating. The term "olefin" as used herein refers to hydrocarbons containing at least one carbon-carbon double bond. The olefins may be monoolefins or polyolefins, cyclic or acyclic, linear or branched. Suitable monoolefins include decene, undecene, dodecene, tridecene, tetradecene, pentadecene, hexadecene, heptadecene, octadecene, nonadecene and eicosene, whether branched, linear or cyclic, alpha or internal olefin. Similar materials in the form of di-, tri- and polyolefins may be used. Polycyclic olefins and polyolefins may also be used. Dicyclopentadiene is found useful. The oxygen-containing hydrocarbons may also be mixed with other hydrocarbons, such as alkanes or aromatic solvents.

In general, for superior activity of the catalyst upon start-up in the plant, the weight percent of the unsaturated compounds of any hydrocarbon used in the process (including unsaturated oxygen-containing hydrocarbon and olefin) should be above about 5%wt., preferably above about 10%wt., and most preferably above about 30%wt. Generally, a higher weight percent of unsaturation compounds is used, say above about 50%wt; most conveniently the weight percent of the unsaturated hydrocarbons is 100%wt (undiluted form and only unsaturated oxygen-containing hydrocarbon and/or olefins). For example, when the catalyst is treated with olefins and oxygen-containing hydrocarbons, the unsaturation may be provided from olefin alone using saturated oxygen-containing hydrocarbons or from olefin and some unsaturated oxygen-containing hydrocarbon. Of course, unsaturated oxygen-containing hydrocarbon alone without olefins can also be used. It is to be understood that the oxygen-containing hydrocarbons may be provided as oxygen-containing hydrocarbon precursors which are converted to the oxgyen-containing hydrocarbon before or upon reaching the reaction temperature such as, reacting lower molecular weight acids (e.g. lower than $C_{12}$ acids) with glycerol to form a higher triglyceride acid ester.

The minimum amount of oxygen-containing hydrocarbon used should be such that the catalyst obtained that is less spontaneously combustible. The maximum amount of oxygen-containing hydrocarbon used is determined primarily by economics. In a preferred embodiment the amount of substance or mixtures containing the oxygen-containing hydrocarbon is used that will just fill the pore volume of the impregnated catalyst or just slightly less, down to about 50 percent, preferably down to about 70 percent of the pore volume. A general range is from 50 to 95, more preferably from 70 to 90, percent. A preferred target range is from 80 to 95 percent although greater than 100% hydrocarbon can be used. In this manner, the treated catalyst will be "dry" (flow freely) and is more convenient to handle.

The presulfurized catalyst obtained by the above presulfurization process may be converted to sulfided catalysts by contact with hydrogen at temperatures of at least about 200°C, preferably from 200°C to 425°C, or 450°C for, say, 0.5 hours to up to 3 days.

In preferred operation the presulfurized catalyst is loaded into a hydrotreating and/or hydrocracking reactor or tail gas reactor and hydrogen flow is started to the reactor and the reactor is heated up to operating (hydrotreating and/or hydrocracking or tail gas treating) conditions to cause activation of the catalyst the metal oxides and hydrogen react with substantially all of the sulfur incorporated into the catalyst pores, thus producing hydrogen sulfide, water and metal sulfides. In the hydrotreating and/or hydrocracking process, a hydrocarbon feedstock flow may be started simultaneously with the hydrogen or later.

The process of the present invention is further applicable to the sulfurizing of spent catalysts which have been oxy-regenerated. After a conventional oxy-regeneration process, an oxy-regenerated catalyst may be presulfurized as would fresh catalyst in the manner set forth above.

The instant invention also provides a method for stabilizing (less spontaneouly combustible or reducing the self-heating characteristics) a supported metal catalyst containing elemental sulfur, particularly a Group VIB and/or Group VIII metal catalyst, by contacting the catalyst with an oxygen-containing hydrocarbon at a temperature and time sufficient to impregnate and/or to react with the catalyst.

In applying the oxygen-containing hydrocarbon to the catalyst, the oxygen-containing hydrocarbon can be added in batches and mixed or added continuously by spraying the catalyst with the oxygen-containing hydrocarbon.

The inventive process is particularly suitable for application to hydrotreating and/or hydrocracking or tail gas treating catalysts. These catalysts typically comprise Group VIB and/or Group VIII metals supported on porous supports such as alumina, silica, silica-alumina or zeolite; they can be prepared by techniques described in e.g. U.S.-A-4,530,911, 4,520,128 and 4,584,287. Preferred hydrotreating and/or hydrocracking or tail gas treating catalysts contain a group VIB metal selected from molybdenum, tungsten and mixtures thereof and a Group VIII metal selected from nickel, cobalt and mixtures thereof, supported on alumina. Versatile hydrotreating and/or hydrocracking catalysts which show good activity under various reactor conditions are alumina-supported nickel-molybdenum and cobalt-molybdenum catalysts and zeolite-supported nickel-molybdenum and nickel-tungsten catalysts. Phosphorus is sometimes added as a promoter. A versatile tail gas treating catalyst which shows good activity under various reactor conditions is an alumina-supported cobalt-molybdenum catalyst.

Hydrotreating catalysts which are specifically designed for hydrodenitrification operations, such as alumina-supported nickel-molybdenum catalysts, presulfurized or presulfided as described have equal activities, particularly hydrodenitrification activities, compared with catalysts without the oxygen-containing hydrocarbon treatment. Hydrocracking catalysts such as nickel-molybdenum or nickel-tungsten on a zeolite or silica-alumina support presulfurized as described provide increased liquid yield over catalysts without the oxygen-containing hydrocarbon treatment. Thus, the invention is also an improved hydrotreating and/or hydrocracking process which comprises contacting at hydrotreating and/or hydrocracking conditions a hydrocarbon feedstock and hydrogen with a catalyst which has been presulfurized as described and which has been heated to hydrotreating and/or hydrocracking temperature in the presence of hydrogen and optionally a hydrocarbon feedstock. The ability to avoid instantaneous combusting provides the presulfurized catalysts with a significant commercial advantage.

The ex-situ presulfurization method of this invention allows the hydrotreating, hydrocracking and/or tail gas treating reactors to be started up more quickiy compared with the in-situ operation by eliminating the presulfiding step. Further, the presulfurized catalysts of the invention can be handled more conveniently than the conventional ex-situ presulfurized catalysts. Thus, the instant invention provides a process for starting up a hydrotreating and/or hydrocracking reactor, which comprises loading the catalyst presulfurized as described herein into the reactor and activating the catalyst by heating the reactor to operating conditions in the presence of hydrogen and optionally a hydrocarbon feedstock.

Further, it has been found that catalysts activated by heating the catalyst in the presence of hydrogen and at least one feedstock or hydrocarbon having a boiling point at least 35°C, preferably from 40°C, more preferably from 85°C, to 700°C, preferably to 500°C at atmospheric pressure, give increased yields compared to gas activated catalysts. Such hydrocarbons include, for example, jet fuels, kerosines, diesel fuels, gasolines, gas oils, residual gas oils and hydrocarbon feed streams (feedstocks). The catalysts are suitably activated at a temperature from 25°C to 500°C, preferably to 450°C, and a hydrogen pressure of from 50, preferably 350, to 3000 psig. The hydrocarbon rate will typically have a liquid hourly space velocity ("LHSV") from 0.1, preferably from 0.2, to about 20, preferably 15, more preferably 10, $hr^{-1}$.

Hydrotreating conditions typically comprise temperatures from 100°C to 450°C, preferably to 425°C, and pressures above 40 atmospheres. The total pressure will typically range from 400 to 2500 psig. The hydrogen partial pressure will typically range from 200 to 2200 psig. The hydrogen feed rate will typically range from 200 to 10000 standard cubic feet per barrel ("SCF/BBL"). The feedstock rate will typically have a liquid hourly space velocity ("LHSV") from 0.1 to 15.

Hydrocracking conditions typically comprise temperatures from 100°C, preferably from 150°C, more preferably from 200°C, to 500°C, preferably to 485°C, more preferably to 450°C, and pressures from 40 atmospheres. The total pressure will typically be from 100 to 3500 psig. The hydrogen partial pressure will typically range from 100, preferably from 300, more preferably from 600 psig, to 3500, preferably to 3000 psig. The hydrogen feed rate will typically range from 1000, more preferably from 2000, to 15,000, more preferably to 10,000, SCF/BBL. The feedstock rate will typically have a LHSV from 0.05, preferably from 0.1 to 20, preferably to about 15, more preferably to about 10. First stage hydrocrackers, which carry out considerable hydrotreating of the feedstock may operate at higher temperatures than hydrotreaters and at lower temperatures than second stage hydrocrackers.

Tail gas treatment reactors typically operate at temperatures ranging from 100°C, preferably from 200°C, to about 450°C, preferably 400°C and at atmospheric pressure. Typically 0.5 to 5% vol. of the tail gas fed to the reactor will comprise hydrogen. Standard gaseous hourly space velocities of the tail gas through the reactor will range from 500 to 10,000 $hr^{-1}$. Claus unit feed or tail gas can be used to start up the catalysts. Supplemental hydrogen, as required, may be provided by a gas burner operating at a substoichiometric ratio in order to produce hydrogen.

In another embodiment of the invention, catalysts in a refining or a chemical plant reactor such as hydrocracking, hydrotreating, tail gas treating, hydrogenation, dehydrogenation isomerization and de-waxing can be treated with the oxygen-containing hydrocarbon and optionally carrier oil including feed oil and/or fused-ring aromatic hydrocarbons before unloading from the reactor, typically when operation is suspended, stopped or halted by terminating the refining or chemical reaction, for example by terminating the feed or by lower temperature, the process provides a method of safely unloading the catalysts with minimal catalyst oxidation and deterioration. The oxygen-containing hydrocarbon-containing mixture (mixture can be undiluted oxygen-containing hydrocarbon) penetrates to the surface of the catalyst and diffuses into the pores of the catalysts at the temperature in the reactor after suspension (or stopping) of its operation, and "coats" the catalyst with a film.

It is preferred that the temperature within the reactor column be lower than the smoke point or boiling point (at the reactor operation pressure) of the oxygen-containing hydrocarbon when the mixture is added to the catalyst in the reactor. Thus, after the operation of the reactor is stopped, the feed and/or catalyst can be cooled from the operating temperature by allowing the reactor to equilibrate with the ambient temperature, recycling or by passing feed through a cooling unit. The feed to the reactor can optionally be shut off. For many of the oxygen-containing hydrocarbons, the temperature of the reactor and/or catalyst is preferably less than about 175°C, more preferably less than about 125°C when the hydrocarbon is contacted with the catalyst at atmospheric pressure. If the hydrocarbon is contacted with the catalyst at elevated reactor pressures, the reactor and/or catalyst temperatures can be higher. The contact temperature can be as low as the unloading temperature or lower. The catalyst is typically unloaded at a temperature about room temperature to about 70°C.

The oxygen-containing hydrocarbon mixture can be introduced into a reactor column after suspension of reactor operation. The mixture can be added to a batch containing the catalysts or to a recycle stream. Optionally, heavy oil or any similar raw material from the reactor columns can be removed before adding the hydrocarbon. The catalyst is coated with the hydrocarbon upon contact and incorporation, thus enhancing the safety of the unloading operation by protecting the catalyst against oxidation and rendering the catalyst less spontaneously combustible.

A mixture containing the oxygen-containing hydrocarbon preferably in an amount from 1 to 100 weight percent of the mixture is contacted with the catalyst in the reactor for a time effective to coat the catalyst and reduce the self-heating characteristics of the catalyst. Preferably the mixture should be used in an amount sufficient to coat the surface of the catalyst.

The oxygen-containing hydrocarbon may be applied in admixture with a fused-ring aromatic hydrocarbon and/or a carrier oil. Preferable fused-ring aromatic hydrocarbon include for example, any fused-ring aromatic hydrocarbon containing at least 2 rings, preferably 2 to 4 rings, such as naphthalenes such as alkylnaphthalene; anthracenes such as alkylanthracene; and pyrenes such as allylpyrene. Such fused-ring aromatic hydrocarbons may be unsubstituted or substituted for example with alkyl or aryl moieties. Carrier oil can be any hydrocarbon stream used in refining operations or a blend thereof having a flash point of above about 38°C. Preferably carrier oil includes straight-run heavy gas oil (HGO), vacuum gas oil (VGO), diesel oil and the like.

The oxygen-containing hydrocarbon and optionally fused-ring aromatic hydrocarbon and/or carrier oil can be added through separate lines then mixed or added after being mixed. If desired, the mixture can be heated with any heating means such as a heating furnace, band heater, heating coil or a heat exchanger, to the desired temperature.

The invention will now be illustrated by the following non-limiting Examples.

Example I:

This Example demonstrates the case where the catalyst is first presulfurized and then treated with oxygen-containing hydrocarbon.

Part A: Sulfur impregnation

A commercial hydrotreating catalyst having the properties listed below was used.

Table 1

| Catalyst Properties | |
| --- | --- |
| Nickel | 3.0 %wt |
| Molybdenum | 13.0 %wt |
| Phosphorous | 3.5 %wt |
| Support | gamma alumina |
| Surface Area, $m^2$/g | 162 |
| Water Pore Vol., cc/g | 0.47 |
| Size | 1/16 inch trilobes |

250 Gram of the above sample was dried at 371°C for one hour and then cooled to ambient under vacuum. The sample was then placed in a flask and enough sulfur, in powdered form, was added at 85°C to produce a sulfur level of about 10% by weight. The sulfur was allowed to coat the catalyst and then the flask, which was provided with a slow nitrogen purge and placed in a heating mantle, was further heated to 120°C for 30 minutes. During this period the flask was vibrated continually to provide mixing of sulfur and catalyst. The final sulfur level was about 10% by weight of the total catalyst. The water pore volume of the sulfur-impregnated catalyst was determined to be about 0.37 cc/g.

Part B: Oxygen-containing Hydrocarbon Reaction and Comparative Examples

The sulfur-impregnated catalyst from Part A was impregnated with the various oxygen-containing hydrocarbons listed in Table 2. Catalyst from Part A was also impregnated with Diesel and Neodene 14/16/18 alpha-olefins as comparative examples. Impregnation was sufficient to fill 80% of the pore volume calculated by:
(pore volume of catalyst from Part A)(80%)(adjusted weight of catalyst) (density of oxygen-containing hydrocarbon or comparative compounds)=grams of oxygen-containing hydrocarbon or comparative compounds. The pore volume of the catalyst was determined with water (mL/g). "Adjusted weight" is the amount of sulfur/catalyst remaining after retains and pore volume analysis.

The lard, vegetable residue and coconut oil, being solids or semi-solids at room temperature, were heated up to approximately 80°C before being applied to the catalyst. All other hydrocarbons were simply added to the catalyst at room temperature. The catalyst was shaken with the hydrocarbon until the catalyst appeared dry and is free flowing. This took approximately 10 minutes per sample. Once the hydrocarbon was absorbed the catalyst temperature was allowed to return to room temperature.

150 Grams of the catalyst were loaded into a 1 liter four-neck flask equipped with a thermocouple through one of the necks and placed in a heating mantle. Another neck of the flask was tubed to a another flask equipped with a condenser which was tubed to a silicone oil-filled container to prevent air back-diffusion (outlet). Nitrogen flow was established to the flask through another neck of the flask (inlet) at 273 cc/min. The remaining neck was stoppered. The flask was attached to a vibratory table and vibrated for the duration of the heat treatment described below.

The reactor was heated to 260°C over ten to twenty minutes and held there typically for 30 minutes. After heat treatment was complete, the reactor contents were cooled to room temperature under nitrogen purge. The samples were analyzed for sulfur content and the exothermic onset temperatures of the samples were tested.

Part C: Self-Heating Ramp Test

Approximately a 12 gram aliquot of the test sample was placed in a 3.1 cm diameter, 4.6 cm height sample container, made of 250 mesh stainless steel net, covered with a 30 mesh stainless steel net, container cover which had a square bottom net with the corners bent to form four legs so as to raise the sample container 0.8 cm off platform.

The sample container was placed in a programmable furnace at ambient temperature with a stagnant atmosphere. A thermocouple was placed in the center of the sample. Another thermocouple was placed near the sample container to monitor oven temperature. The oven was ramped at 0.4°C/minute to 450°C. The temperature data was collected and plotted as described below.

A time-temperature profile was plotted with temperature in the Y-axis and time in the X-axis for catalyst temperature and oven temperature.

Exothermic onset temperatures of the temperature profile test were determined by drawing a 45 degree tangent on the sample's temperature trace at the onset of an exotherm. From the tangent point, a vertical line was drawn to the oven trace then from that point horizontal to the Y axis for temperature readings. The results of the self-heating ramp tests are shown in Table 2 below.

Table 2

| Exothermic Onset Temperatures | |
|---|---|
| Oxygen-containing hydrocarbon | Onset of Exotherm (°C) |
| Lard [a] | 262 |
| Vegetable Residue [b] | 250 |
| Distilled Methyl Esters [c] | 206 |
| Linoleic Acid [d] | 244 |
| Fatty alcohol [e] | 212 |
| Linseed Oil [f] | 273 |
| Soybean Oil [g] | 237 |
| Coconut Oil [h] | 200 |
| Comparative | |
| Diesel [i] | 156 |
| Neodene® 14/16/18 [j] | 158 |

a) Lard from Armour Foods.
b) A vegetable oil residue from Arista Industries, a mixture of glycerides, polyglycerides, polyglycerols, dimer acids, hydrocarbon and alcohols comprising 79%wt $C_{18}$ fatty acids, and 17%wt $C_{16}$-fatty acids and having an iodine value of 95-110.
c) Distilled methyl esters from Arista Industries, Inc. having 100 %wt of composition of CAS Registry No. 68990-52-3.
d) 99% purity linoleic Acid from Aldrich Chemical.
e) Mixture of alcohols from Henkel Corporation 87-95%wt oleyl alcohol and 2-10%wt cetyl alcohol having 90-95 iodine value.
f) Raw linseed oil from Anlor Oil Company.
g) RBD soybean oil from Lou Ana Foods.
h) Laxmi Brand distributed by House of Spices.
i) No.2 fuel oil with cetane value of 43 from Exxon Refining and Marketing Company.
j) An olefin product manufactured by Shell Chemical Co. 93.5%wt. minimum alpha-monoolefin comprising 15%wt. $C_{14}$ alpha-monoolefin, 50%wt. $C_{16}$ alpha-monoolefin and 35%wt. $C_{18}$ alpha-monoolefin.

Part D: Sulfur Leaching Tests

Toluene was used as a extractive solvent for measuring the ability of the catalysts to resist sulfur leaching. Generally, the samples were subjected to a hot toluene extraction then washed with petroleum ether and dried for analysis. Sulfur analyses before and following the extraction are used to calculate percent sulfur retention. A thorough drying of the sample is necessary to prevent artificially high carbon and sulfur readings during analysis.

A Soxhlet extractor (200ml) equipped with a boiling flask (500ml) and Allihn condenser was used. The cotton thimble of the extractor was filled with approximately 10 grams of catalyst to be analyzed and loaded into the Soxhlet extractor. The boiling flask was filled about 3/4 full (about 350ml) with toluene. Toluene was brought to rapid boiling so a cycle of filling and emptying of thimble occurs approximately every 7-9 minutes. The catalyst sample was extracted for a minimum of 4 hours to a maximum of 18 hours. Extraction was stopped when extract in siphon tube was water clear. Catalyst was cooled and placed on a filter in a Buchner funnel and washed with 50 mL of petroleum ether to displace toluene and then dried in a 100°C oven for 1 hour. Prolonged drying may compromise results by loss of sulfur from sample. An alternate drying method is to purge the sample with nitrogen for 2 to 3 hours. The extracted catalysts were analyzed for carbon and sulfur content (wt.% and) with a LECO corporation CS-244 carbon-sulfur analyzer. The percent of sulfur retained after extraction is shown in Table 3 below. This percent of retained sulfur is calculated as the amount of sulfur on the catalyst after the extraction of Part D (Fresh Basis after) divided by the sulfur in the catalyst after the oxygen-containing hydrocarbon treatment of Part B (Fresh Basis before) times 100%. Fresh basis was calculated using the following equation:

Fresh Basis Sulfur = Sulfur wt.% / (100- (Carbon wt.% + Sulfur wt.%)) * 100%.

Table 3

| Sulfur Leaching Results "Reactant" Hydrocarbon Amount of Sulfur After Extraction | |
| --- | --- |
| Oxygen-containing hydrocarbon | Sulfur Extractability (%) |
| Lard [a)] | >95 |
| Vegetable Residue [b)] | 85 |
| Distilled Methyl Esters [c)] | >95 |
| Linoleic Acids [d)] | 86 |
| Fatty alcohol [e)] | 66 |
| Linseed Oil [f)] | 85 |
| Soybean Oil [g)] | 88 |
| Coconut Oil [h)] | 96 |
| Comparative | |
| Diesel [i)] | 77 |
| Neodene® 14/16/18 [j)] | 95 |
| a)-j) as described in Table 2. | |

Part E: Sulfur Retention Tests

A commercial hydrotreating catalyst having the properties listed below was used to prepare the sulfurized catalysts:

Table 4

| Catalyst Properties | |
| --- | --- |
| Nickel | 2.24 %wt |
| Molybdenum | 7.54 %wt |
| Phosphorus | 3.5 %wt |
| Support | gamma alumina |
| Surface Area, $m^2/g$ | 309 |
| Water Pore Vol., cc/g | 1 |
| Size | 1/16 inch trilobes |

Sulfur was impregnated according to the method of Part A using 5.9wt% of sulfur and soybean oil and Neodene 14/16/18 were impregnated according to the method of Part B. Carbon and sulfur content of the catalyst were analyzed using LECO corporation CS-244 carbon-sulfur analyzer. Fresh Basis Sulfur was calculated using the equation shown in Part D. Percent Stoichiometric sulfur was calculated by dividing (the Fresh Basis Sulfur) over (the amount of sulfur added) times 100 percent.

Table 5

| Sulfur Retention | | | | |
|---|---|---|---|---|
| Sample | Carbon wt.% | Sulfur wt.% | Fresh Basis Sulfur wt.% | Percent Stoichiometric |
| Neodene[®a)] | 26.7 | 3.0 | 4.3 | 73 |
| Soybean[b)] | 33.5 | 3.5 | 5.6 | 95 |

a) and b) as described in Table 2 as j) and g) respectively.

As can be seen from the Table the percent retention of sulfur is significantly improved by using a glyceride fatty acid ester.

Example II:

This Example demonstrates the embodiment where the presulfided or sulfurized catalyst is coated with oxygen-containing hydrocarbon.
A commercial sulfurized hydrotreating catalyst having the properties listed below was used.

Table 6

| Catalyst Properties | |
|---|---|
| Nickel | 3.0 %wt |
| Molybdenum | 13.0 %wt |
| Phosphorus | 3.5 %wt |
| Sulfur | 8 %wt |
| Support | gamma alumina |
| Size | 1/16 inch trilobes |

The oxygen-containing hydrocarbon listed in Table 7 was added to the sulfurized catalyst in an amount listed. The hydrocarbon was added to the catalyst at ambient temperature and allowed to absorb into the pores. The treated catalyst may take some time to absorb the substances so that it is not tacky and flows freely. The self-heating ramp test was measured in a similar manner to Example I, part C.

Table 7

| Post-coating | | |
|---|---|---|
| Oxygen-containing Hydrocarbon | Amount(wt%) | Onset of Exotherm (°C) |
| 1:1 wt ratio soybean:linseed | 8 | 280 |
| 1:3 wt ratio soybean:linseed | 10 | 260 |

Example III:

A presulfurized catalyst prepared in a similar manner to Example I was used in a hydrotreating process. 7 types of catalysts, (1 comparative) were used. These were:

1) COMP Catalyst - the commercial hydrotreating catalyst listed in Table 1 which has been sulfided by an industry accepted sulfiding method using hydrogen and hydrogen sulfide as described below.
2) A Catalyst - a catalyst prepared as described in Illustrative Embodiment I with 100% stoichiometric sulfur and using the lard described in Table 2.
3) B Catalyst - a catalyst prepared as described in Illustrative Embodiment I with 100% stoichiometric sulfur and using the vegetable residue described in Table 2.
4) C Catalyst - a catalyst prepared as described in Illustrative Embodiment I with 100% stoichiometric sulfur and using the coconut oil described in Table in Table 2.
5) D Catalyst - a catalyst prepared as described in Illustrative Embodiment I with 100% stoichiometric sulfur and using the methyl esters described in Table 2.
6) E Catalyst - a catalyst prepared as described in Illustrative Embodiment I with 100% stoichiometric sulfur and using the vegetable oil described in Table 2 and Neodene 14/16/18 alpha-olefin described in Table 2 in a weight ratio of 1:1.

The catalysts were loaded into the reactor as follows: 48cc of catalyst (basis compacted bulk density) was divided into 3 aliquots. The first aliquot contained 4 cc of catalyst and was diluted with 10 to 14 mesh alundum at a ratio of alundum to catalyst of 10:1. The remaining two aliquots contained 22 cc of catalyst each and were diluted 1:1 with alundum. These aliquots were loaded into the reactor tube with the dilute one on top (the inlet end).

Activity Tests

A blend of 50 wt% vacuum gas oil, 25 wt% light cycle oil and 25 wt% CC heavy gas oil (VGO/LCO) was used as feedstock having the following properties:

| %wt Sulfur | 1.93 |
|---|---|
| ppm Nitrogen | 1420 |
| Refractive Index | 1.5377 (25°C) |
| API Gravity | 17.8° |

1) COMP Catalyst Activation

The Catalyst was dried at 400°C for one hour in air, cooled in a desiccator and loaded into the reactor. It was sulfided in a flow of 60 Nl/hr of 95%vol hydrogen/5%vol hydrogen sulfide according to the following schedule:

a. ambient to 218°C in one hour
b. hold at 218°C for one hour
c. heat from 218°C to 329°C in one hour
d. heat from 229°C to 343°C in one hour
e. hold at 343°C for one hour
f. cool reactor and hold at 246°C

2) Diesel Activation

This method was used to activate catalysts using a diesel refined for cars and trucks and was as follows:

a. Unit was pressurized to 700 psig and hydrogen circulation was established at 1000 SCF/BBL ( Nl/hr).
b. Diesel feed was started to the catalyst bed at 1.5 LHSV and ambient temperature.
c. The reactor temperature was raised to 121°C in one hour, then increased to 343°C at rate of 27.8°C/hour. Temperatures were held at 343°C for 30 minutes.
d. The reactor was then cooled over 2 hours to 246°C.

## 3) Activity Testing

For activity testing the unit was pressured up to 700 psig and heated to 246°C with a hydrogen gas rate of 220 SCF/bbl (13.2 Nl/hr). The VGO/LCO feed was started to the unit at 1.5 LHSV (66 gm/hr). After the feed had wetted the entire bed (and product was noted in the separator), the temperature was raised to 329°C at 22.2°C/hr.

After the reactor was at 329°C, a 12 hour break-in period was begun. The product from this period was not analyzed. The run was continued with additional weight periods of 12 hours and the products of third weight period (37-48 hours) were analyzed for nitrogen and sulfur. From these values rate constants were calculated for the hydrodenitrification ("HDN") reaction and the hydrodesulfurization ("HDS") reaction. These provide an indication of how active the catalyst is, the higher the rate constant, the faster the reaction process, and the higher the conversion of sulfur and nitrogen at a given space velocity (feed rate). For HDN the reaction order is 1.0 and the k value is calculated by the equation

$$k = (space\ velocity)^* 1n \left\{ \frac{conc.\ of\ N\ in\ feed}{conc.\ of\ N\ in\ product} \right\}$$

For HDS the reaction is not first order and many values are used, but 1.7 is the value most used and is used herein to calculate as follows:

$$R = \left\{ \frac{space\ velocity}{1.7-1} \right\} \left\{ \frac{1}{(conc.\ of\ S\ in\ product)^{0.7}} - \frac{1}{(conc.\ of\ S\ in\ feed)^{0.7}} \right\}$$

The relative rate constants are provided in Table 8, normalized against the values for the third weight period for the COMP Catalyst.

### Table 8

| | Activity Tests Weight Period | | |
|---|---|---|---|
| Catalyst | Activation | HDS Rel.K Value | HDN Rel. K Value |
| COMP | 1) Standard | 1.00 | 1.00 |
| A | 2) Diesel | 0.94 | 0.88 |
| B | 2) Diesel | 1.04 | 0.94 |
| C | 2) Diesel | 0.87 | 0.87 |
| D | 2) Diesel | 0.94 | 1.02 |
| E | 2) Diesel | 1.00 | 1.01 |

As can be seen the catalysts of this invention show a comparable hydrodenitrification activity (without significant decrease in activity) to a traditional hydrotreating catalyst. Further, catalysts containing unsaturated hydrocarbons show advantage over catalyst with only saturated hydrocarbons with regard to the hydrodenitrification activity.

## Example IV:

Z-753 Ni-W/Ultrastable Y zeolite based hydrocracking catalyst, (from Zeolyst International Inc.), was presulfurized according to the procedure outlined in Example I.

Sulfur was incorporated according to the method of Part A using 5.5 wt% of sulfur. Soybean oil and Neodene were impregnated on the catalyst according to the method of Part B. Carbon and sulfur content of the catalyst were analyzed using LECO corporation CS-244 carbon-sulfur analyzer. Fresh Basis Sulfur was calculated using the equation shown in Part D. Percent Stoichiometric sulfur was calculated by dividing the Fresh Basis Sulfur percent by the percent sulfur calculated for complete conversion of the oxidic nickel and tungsten to the corresponding $Ni_3S_2$ and $WS_2$ phases.

Table 10

| Sulfur Retention | | | | |
|---|---|---|---|---|
| Sample | Carbon wt.% | Sulfur wt.% | Fresh Basis Sulfur wt.% | Percent Stoichiometric |
| Neodene[a] | 11.1 | 1.4 | 1.6 | 43 |
| Soybean[b] | 20.5 | 2.4 | 3.1 | 84 |

a) as described in Table 2 as j)
b) as described in Table 2 as g)

As can be seen from Table 10, the percent retention of sulfur is significantly improved by using a glyceride fatty acid ester such as soybean oil.

Performance Tests

A blend of 75 vol% hydrotreated cracked heavy gas oil, and 25 vol% hydrocracker bottoms stream was used as feedstock for performance testing of the zeolitic hydrocracking catalysts obtained from Example IV and the fresh Z-753 (Reference Catalyst). Some of the feedstock properties are listed in Table 11. DMDS and n-amylamine were added to the feedstock to generate the requisite levels of $H_2S$ and $NH_3$, respectively.

Table 11

| Performance Testing Feedstock Properties | |
|---|---|
| ppm Sulfur | 14 |
| ppm Nitrogen | 25 |
| wt% Carbon | 87.334 |
| wt% Hydrogen | 12.69 |
| API Gravity | 26.1° |
| 338+ °C (wt%) | 71.4 |
| DMDS (wt%) | 0.133 |
| n-amylamine (wt%) | 0.079 |
| Simulated Distillation of Feedstock | |
| WT% | TEMP °C |
| IBP | 181 |
| 5% | 248 |
| 25% | 330 |
| 50% | 382 |
| 75% | 434 |
| 90% | 481 |
| 98% | 537 |
| FBP | 572 |

Performance Testing Conditions

The conditions employed for the performance testing of the zeolitic catalysts above are given in Table 12.

Table 12

| Performance Testing Conditions | |
|---|---|
| Hydrogen Pressure (psig) | 1800 |
| Hydrogen Circulation (scf $H_2$/bbl feed) | 8935 |
| LHSV (hr$^{-1}$) | 1.5 |
| Cut Point for converison calculation (°C) | 338° |
| Conversion Target (Single Pass, wt%) | 80.0 |

Catalyst Activation Procedures

1) Zeolite Reference Catalyst: Gas Phase Activation

The fresh Z-753 catalyst was dried at 482°C for one hour in air, cooled in a desiccator and loaded into the reactor. It was sulfided in a flow of 95% vol hydrogen/5% vol hydrogen sulfide at a GHSV of 1500 hr$^{-1}$, according to the following gas phase schedule:

a. ambient to 149°C, hold 1 hour
a. 149°C to 371°C in six hours
b. hold at 371°C for two hours
c. cool reactor to 149°C and hold
d. switch to pure hydrogen flow

1b) Zeolite Reference Catalyst: Liquid Phase Activation

To activate the zeolite catalyst, after loading it dried, the reactor was brought to 1800 psig pure hydrogen, at a circulation rate of 8935 scf hydrogen/bbl feed. The activation feedstock employed consisted of the performance testing feedstock containing sufficient dimethyldisulfide (DMDS) to produce 2.5 vol% $H_2S$, and n-amylamine to produce 150 ppm $NH_3$ in the gas phase, respectively. The procedure for the activation was as follows:

a. reactor brought to operating pressure and hydrogen rate
b. activation feedstock introduced at 149°C
c. 149°C to 232°C in 3 hours
d. 232°C to 302°C in 18 hours
e. 302 °C to 315 °C in 8 hours
f. hold 315 °C for 8 hours
g. switch to activity testing feedstock and adjust temperature to maintain 80 wt% conversion of feed.

During steps c-f, $H_2S$ and i-butane were continuously monitored in the exit gas stream of the reactor. Temperature was ramped as long as $H_2S$ remained above 2000 ppmv, and isobutane concentration remained below 0.4 vol%. Otherwise, the ramp was discontinued until these levels were realized.

2) Zeolitic Catalyst:
Gas Phase Activation with 5.0% vol $H_2S$.

The zeolitic hydrocracking catalyst from Example IV was dried at 482°C for one hour in air, cooled in a desiccator and loaded into the reactor. It was activated in the same manner as the catalyst in case 1) of this Example.

2a) Zeolitic Catalyst:
Gas Phase Activation with 0.5% vol H<sub>2</sub>S.

After reactor loading 25 cc of the zeolitic hydrocracking catalyst from Example IV and pressure testing, the following procedure was used for a gas phase activation that simulates 0.5% H<sub>2</sub>S in the recycle gas:

    a. pressurize reactor to 450 psig with pure H<sub>2</sub> and establish a GHSV of 320 hr<sup>-1</sup>.
    b. ramp temperature at 14°C/hr to 120°C; begin sampling the reactor off-gas for H<sub>2</sub>S each 0.5 hr.
    c. switch to 0.5% H<sub>2</sub>S/95.5% H<sub>2</sub> mixture
    d. ramp temperature to 205°C at 14°/hr.
    e. at 205°C, increase pressure to 1500 psig and establish a GHSV of 850 hr<sup>-1</sup>.
    f. ramp temperature to 370°C at 14°C/hr, interrupt ramp if H<sub>2</sub>S in reactor off-gas drops below 2000 ppmv.
    g. hold at 370° for 4 hours
    h. cool to 149°C
    i. switch to pure H<sub>2</sub> and set pressure and flow rates for performance testing

2b) Zeolitic Catalyst: Liquid Feed Activation

The same method as for reference catalyst liquid activation was used to activate zeolitic catalyst from Example IV. The same activity testing feed was used with sufficient dimethyldisulfide (DMDS) and n-amylamine added to produce 2000 ppm H<sub>2</sub>S and 150 ppm NH<sub>3</sub> in the gas phase, respectively. DMDS was added to the feed in order to simulate a minimum level of H<sub>2</sub>S that could be tolerated during activation in the gas recycle loop of commercial units.
All gas phase activated catalysts (1), (2), (2a):
After activation with the hydrogen sulfide/hydrogen mixture, the reactor was cooled to 149°C and the following startup procedure was implemented:

    a. introduce activity testing feed at 149°C
    b. 149°C to 260°C in 5 hours
    c. 22°C/day for 4 days
    d. 5.5°C/day for 5 days
    e. adjust reactor temperature to maintain 80 wt% conversion of 338+ °C in feed.

Conversion (wt%) is defined as follows:

$$100 \times \frac{(\text{Wt\% 338+ °C in feed - Wt\% 338+ °C in product})}{(\text{Wt\% 338+ °C in Feed})}$$

In this conversion definition, gaseous products are included.

Performance Testing Results

Liquid and gas product streams were both analyzed and mass balanced yields based on feed oil and hydrogen were calculated. Representative weight period results from testing of the three zeolite catalysts are found in Table 13. Values for product cuts are reported as mass balanced wt% based on feed.

Table 13

| Representative performance measures for zeolitic hydrocracking catalysts.[a] Values reported are calculated for 80% conversion. | | | | | | | |
|---|---|---|---|---|---|---|---|
| Catalyst[b] | PRODUCT CUTS (°C) | | | | | | |
| | Temp | $C_1$-$C_4$ | $C_5$-82° | 82-190° | 190-288° | 288-338° | 338°+ |
| 1 | 378 | 15.0 | 23.0 | 37.8 | 9.1 | 2.7 | 14.5 |
| 1b | 381 | 17.1 | 23.5 | 35.4 | 8.0 | 3.3 | 14.5 |
| 2 | 378 | 12.1 | 18.5 | 40.6 | 12.3 | 3.6 | 14.5 |
| 2a | 381 | 14.4 | 19.3 | 39.7 | 11.5 | 3.7 | 14.4 |
| 2b | 377 | 11.8 | 19.1 | 42.0 | 10.9 | 3.2 | 14.5 |
| Catalyst[c] | Temp | $C_1$-$C_4$ | $C_5$-82 | 82-190 | 190-288 | 288-338 | 338+ |
| 1 | 384 | 17.7 | 25.4 | 34.9 | 7.3 | 2.3 | 14.6 |
| 2a | 387 | 17.3 | 22.9 | 35.1 | 8.8 | 3.3 | 14.5 |
| 2b | 381 | 13.2 | 19.9 | 40.9 | 10.4 | 2.9 | 14.5 |

(a) Absence of a letter following the catalyst reference number denotes gas phase activation with 5% $H_2S$/95% $H_2$, "a" following the catalyst number denotes gas phase activation with 0.5% $H_2S$/99.5% $H_2$, and "b" denotes liquid phase activation.
(b) Values reported are for 700 hours on feed.
(c) Values reported are for 1400 hours on feed.

As can be seen from Table 13, the zeolitic catalysts of this invention (2,2a,2b) show a significant improvement in liquid yield relative to the reference catalysts (1 and 1b). This improvement occurs regardless of whether the reference catalyst was activated in liquid phase or gas phase, but the more appropriate comparison of the two liquid phase activations reveals the greatest advantage for the invention catalyst. In this case, the catalyst also exhibits an advantage in activity, with a 3°C lower temperature requirement at 80 wt% conversion.

Table 14

| Yield stability data on selected cuts for reference and invention catalysts. | | | | | | |
|---|---|---|---|---|---|---|
| | $C_1$-$C_4$ Yields | | | 82-190°C Yields | | |
| HOURS ==> | 500 | 1000 | 1600 | 500 | 1000 | 1600 |
| Catalyst | | | | | | |
| 1 | 13.8 | 16.6 | 18.3 | 38.6 | 36.4 | 34.5 |
| 1b | 15.4 | 19.5 | - | 37.3 | 32.8 | - |
| 2 | 11.1 | 14.2 | - | 41.4 | 39.0 | - |
| 2a | 11.6 | 14.8 | 16.8 | 40.6 | 37.8 | 35.5 |
| 2b | 10.1 | 12.7 | 13.2 | 43.0 | 41.0 | 40.7 |

Table 14 illustrates the additional benefit of yield stability associated with the process of liquid phase activation of the catalysts prepared according to Example IV. Both the gas phase activated reference catalyst (1) and the liquid phase activated invention catalyst (2b) have an initial C1-C4 yield decline rate of 5.6 wt%/1000 hrs. However, in the case of (2b), the yield decline rate between 1000 and 1600 hours on feed has dropped to 0.8 wt%/1000 hrs, while that of (1) is 2.8 wt%/1000 hrs. The case is even more dramatic when examining the naphtha range (82-190°C) liquid yields. The 1000-1600 hours yield decline rate for (1) is 3.2 wt%/1000 hrs, while that of (2b) is only 0.5 wt%/1000 hrs.
This yield stability can translate into significant improvement in output of valuable products for the refiner, at the same time decreasing the production of the less valuable C1-C4 stream.

Example V

In this Example a spontaneously combustible or self-heating catalyst is unloaded from a reactor after treatment with oxygen-containing hydrocarbon.

A highly self-heating, spent, hydrotreating catalyst listed below (obtained from a hydrotreating reactor) was treated with 1.5 Wt. % soybean oil in a carrier oil (feed stream) and a second sample of same material was treated with 100% soybean oil. The mixtures were heated to 140°C under nitrogen for one hour and then cooled and drained. The material was tested for self-heating properties according to Appendix E of 49 CFR 173 (Test for Class 4, Division 4.2 Substances in Code of Federal Regulations), which requires a 2.5 cm cube size sample and a 10 cm cube size sample.

The samples were further analyzed for exothermic onset by a Differential Scanning Calorimetry, Mettler's TA 4000 using a DSC27HP DSC measuring cell. For the purposes of this test the onset and half the distance along the trace to the first peak were entered to calculate the onset temperature and slop of the curve. The sample was heated from 30°C to 500°C at 10°C per minute. A 500 cc/min of air purge the DSC measuring during the test.

Catalyst Properties:

Cobalt/Molybdenum on activated alumina

| Size | 1/20 inch |
| Shape | Quadralobe |
| Form | Spent |
| Carbon | 12.9 Wt. % |
| Sulfur | 7.9 Wt. % |

Both samples treated with soybean oil (at 1.5 and 100%) passed the Large Basket Test as described in Appendix E of 49 CFR 173. The untreated sample failed the Large Basket Test.

Exothermic Onset temperatures for the samples determined by DSC are as follows:

Table 15

| Sample | Onset Temperature (°C) | Integration* (J/g) |
|---|---|---|
| Untreated Sample | 140 | 2857.6 |
| 1.5 Wt.% Soybean Oil | 238 | 392.2 |
| 100 Wt.% Soybean Oil | 232 | 261.0 |

* samples integrated from onset to 500°C

Samples treated with soybean oil have reduced self-heating. The sample treated with 100% soybean oil have a smaller overall exotherm than the 1.5 Wt.% treated sample as shown by the integration values for each sample.

## Claims

1. A composition comprising a presulfurized or sulfided catalyst which is supported on a porous support, at least a part of which catalyst has been coated and/or impregnated with at least one oxygen-containing hydrocarbon having at least 16 carbon atoms, with the proviso that when the hydrocarbon is a fatty acid triglyceride the catalyst has not been coated and/or impregnated with it prior to or at the same time as the catalyst is presulfurised or sulfided thereby reducing the self-heating characteristics of said catalyst.

2. A composition according to claim 1 wherein the oxygen-containing hydrocarbon is an acid, acid ester, alcohol, ketone, aldehyde or ether.

3. A composition according to claim 2 wherein the acid ester is a mono-, di-, tri-, or poly-fatty acid ester.

4. A composition according to claim 3 wherein the fatty acid ester is a glyceride fatty acid ester having from 16 to 100 carbon atoms.

5. A composition according to any one of claims 1 to 4 wherein the oxygen-containing hydrocarbon has from 16 to 80 carbon atoms.

6. A composition according to claim 3, 4 or 5 wherein the acid ester is an unsaturated or saturated fatty acid ester.

7. A composition according to claim 6 wherein the unsaturated fatty fatty acid ester derived from palmitoleic, oleic, linoleic, linolenic, eleostearic, ricinoleic, eicosenoic, docosenoic, eicosatetraenoic, eicosapentaenoic, decosapentaenoic or docosahexaenoic acid or a mixture thereof; and/or soybean oil, linseed oil, safflower oil, sunflower oil, corn oil, cottonseed oil, olive oil, tung oil, castor oil, rapeseed oil, tall oil, peanut oil, canbra oil perilla oil, vegetable residue, marine oil or a mixture thereof; or a saturated fatty acid ester derived from coconut oil, palm oil, lard or tallow or a mixture thereof.

8. A composition according to any one of the preceding claims wherein the catalyst comprises at least one metal, metal sulfide or metal oxide of a metal of Group VIB or Group VIII of the Periodic Table.

9. A composition according to claim 8 wherein the catalyst is supported on alumina, silica, silica-alumina, zeolite or a mixture thereof.

10. A composition according to any one of claims 1 to 9 wherein the catalyst is a reduced catalyst, a hydrocracking catalyst or a hydrotreating catalyst.

11. A method of reducing the self-heating characteristics of a presulfurized or sulfided catalyst which has a tendency to self-heat or combust in the presence of air or oxygen at a temperature of 200°C or lower and which catalyst is supported on a porous support, which comprises contacting said catalyst with at least one oxygen-containing hydrocarbon having at least 16 carbon atoms fatty acid triglyceride the catalyst has not been coated and/or impregnated with it prior to or at the same time as the catalyst is presulfurised or sulfided.

12. A method according to claim 11 wherein the hydrocarbon is one defined in any one of claims 1 to 7 and/or the catalyst is one defined in any one of claims 8 to 10.

13. A method according to claim 11 or 12 which comprises presulfurizing porous particles of a sulfidable catalyst containing at least one metal or metal oxide by

(a) contacting said catalyst with elemental sulfur at a temperature such that at least a portion of said sulfur is incorporated in the pores of said catalyst by sublimation and/or melting; and
(b) prior to, at the same time as or subsequent to step (a), contacting said catalyst particles with said at least one oxygen-containing hydrocarbon.

14. A method according to claim 11 wherein the at least one oxygen-containing hydrocarbon has at least 20 carbon atoms or is a glyceride fatty acid ester, which comprises presulfurizing porous particles of a sulfidable catalyst containing at least one metal or metal oxide by

(a) contacting said catalyst with a least one sulfur compound under conditions so as to incorporate at least a portion of said sulfur compound in the pores of said catalyst by impregnation; and
(b) prior to, at the same time as or subsequent to step (a), contacting said catalyst particles with said at least one oxygen-containing hydrocarbon.

15. A method according to claim 13 or 14 wherein the hydrocarbon is one defined in any one of claims 2 to 7.

16. A process for preparing catalyst suitable for hydrotreating and/or hydrocracking a hydrocarbon stream or tail gas treating a sulfur-containing gas stream, which comprises heating a presulfurized composition as claimed in claim 1 to 200°C to 500°C in the presence of hydrogen to produce metal sulfide.

17. A process according to claim 16 wherein the catalyst is activated by heating the treated presulfurized catalyst in the presence of hydrogen and at least one hydrocarbon having a boiling point of at least about 35°C at atmospheric pressure at a temperature from 25°C to 430°C, a hydrogen partial pressure from 50 psig to 3000 psig and a Liquid Hourly Space Velocity from 0.1 to 20 hr$^{-1}$.

18. A process according to claim 17 wherein the hydrocarbon is jet fuel, kerosine, diesel fuel, gasoline, gas oil, residual gas oil or hydrocarbon feed stream.

19. A process for hydrotreating and/or hydrocracking a hydrocarbon stream or tail gas treating sulfur-containing gas stream which comprises contacting the stream in the presence of hydrogen with a sulfided catalyst as claimed in claim 10 or one prepared by a process as claimed in claim 16.

20. A process according to claim 19 wherein the stream is contacted with the hydrocracking catalyst at a temperature from 100°C to 450°C.

21. A method of transporting a presulfurized or sulfided catalyst which has a tendency to self-heat or combust in the presence of air or oxygen at a temperature of 200°C or lower and which catalyst is supported on a porous support, which comprises the method of claim 11, placing the treated catalyst in a container and then transporting the container.

22. A method according to claim 20, wherein at least 100 kg of catalyst is placed in said container.

23. A method of unloading a presulfurized or sulfided catalyst which has a tendency to self-heat or combust in the presence of air or oxygen at a temperature of 200°C or lower and which catalyst is supported on a porous support, from a reactor in operation which comprises stopping reactor operation, the method of claim 11 and then removing the oxygen-containing hydrocarbon treated catalyst from the reactor.

24. A method according to any of claims 19 to 23 wherein the hydrocarbon is as defined in any one of claims 2 to 7.

**Patentansprüche**

1. Masse, umfassend einen vorsulfatisierten oder -sulfidierten Katalysator auf einem porösen Träger, wobei zumindest ein Teil des Katalysators mit mindestens einem sauerstoffhaltigen Kohlenwasserstoff mit mindestens 16 Kohlenstoffatomen überzogen und/oder imprägniert ist, mit der Maßgabe, daß, wenn der Kohlenwasserstoff ein Fettsäuretriglycerid ist, der Katalysator damit nicht überzogen und/oder imprägniert ist vor oder zu dem Zeitpunkt, zu dem der Katalysator vorsulfatisiert oder -sulfidiert wird, wodurch die Selbsterhitzungscharakteristika des Katalysators verringert werden.

2. Masse nach Anspruch 1, wobei der sauerstoffhaltige Kohlenwasserstoff eine Säure, ein Säureester, Alkohol, Keton, Aldehyd oder Ether ist.

3. Masse nach Anspruch 2, wobei der Säureester ein Mono-, Di- oder Polyfettsäureester ist.

4. Masse nach Anspruch 3, wobei der Fettsäureester ein Glyceridfettsäureester mit 16 bis 100 Kohlenstoffatomen ist.

5. Masse nach einem der Ansprüche 1 bis 4, wobei der sauerstoffhaltige Kohlenwasserstoff 16 bis 80 Kohlenstoffatome enthält.

6. Masse nach Anspruch 3, 4 oder 5, wobei der Säureester ein ungesättigter oder gesättigter Fettsäureester ist.

7. Masse nach Anspruch 6, wobei der ungesättigte Fettsäureester abgeleitet (ist) von Palmitoleinsäure, Oleinsäure, Linolsäure, Linolensäure, Eläostearinsäure, Ricinolsäure, Eicosensäure, Docosensäure, Eicosatetraensäure, Eicosanpentaensäure, Decosanpentaensäure oder Docosanhexaensäure oder einem Gemisch davon und/oder Sojabohnenöl, Leinsamenöl, Färberdistelöl, Sonnenblumenöl, Maisöl, Baumwollsamenöl, Olivenöl, Tangöl, Rhizinusöl, Rapssamenöl, Tallöl, Erdnußöl, Canbraöl, Perillaöl, pflanzlichen Resten, Fischöl oder einem Gemisch davon oder ein gesättigter Fettsäureester, abgeleitet (ist) von Kokosnußöl, Palmöl, Schmalz oder Talg oder einem Gemisch davon.

8. Masse nach einem der vorangehenden Ansprüche, wobei der Katalysator mindestens ein Metall, Metallsulfid oder Metalloxid eines Metalls der Gruppe VIB oder VIII des Periodensystems umfaßt.

9. Masse nach Anspruch 8, wobei der Katalysator auf Tonerde, Kieselsäure, Kieselsäure/Tonerde, Zeolith oder einem Gemisch davon vorliegt.

10. Masse nach einem der Ansprüche 1 bis 9, wobei der Katalysator ein reduzierter Katalysator, ein Hydrocrack-Katalysator oder ein Hydrotreating-Katalysator ist.

**11.** Verfahren zur Verringerung der Selbsterhitzungscharakteristika eines vorsulfatisierten oder sulfidierten Katalysators, der eine Neigung zur Selbsterhitzung oder Verbrennung in Gegenwart von Luft oder Sauerstoff bei einer Temperatur von 200°C oder darunter besitzt, und wobei der Katalysator auf einem porösen Träger vorliegt, umfassend das Zusammenbringen des Katalysators mit mindestens einem sauerstoffhaltigen Kohlenwasserstoff mit mindestens 16 Kohlenstoffatomen mit der Maßgabe, daß, wenn der Kohlenwasserstoff ein Fettsäuretriglycerid ist, der Katalysator damit nicht überzogen und/oder imprägniert ist vor oder zu dem Zeitpunkt, zu dem der Katalysator vorsulfatisiert oder -sulfidiert wird.

**12.** Verfahren nach Anspruch 11, wobei der Kohlenwasserstoff ein solcher ist, wie in einem der Ansprüche 1 bis 7 definiert und/oder der Katalysator ein solcher ist, wie in einem der Ansprüche 8 bis 10 definiert.

**13.** Verfahren nach Anspruch 11 oder 12, umfassend das Vorsulfatisieren von porösen Teilchen eines sulfidierbaren Katalysators, enthaltend mindestens ein Metall oder Metalloxid, durch

(a) Zusammenbringen des Katalysators mit elementarem Schwefel bei einer solchen Temperatur, daß mindestens ein Teil des Schwefels in die Poren des Katalysators durch Sublimation und/oder Schmelzen eingebaut wird, und

(b) vor, gleichzeitig, mit oder anschließend an die Stufe (a) Zusammenbringen der Katalysatorteilchen mit dem mindestens einen sauerstoffhaltigen Kohlenwasserstoff.

**14.** Verfahren nach Anspruch 11, wobei der mindestens eine sauerstoffhaltige Kohlenwasserstoff mindestens 20 Kohlenstoffatome enthält oder ein Glyceridfettsäureester ist, umfassend das Vorsulfatisieren von porösen Teilchen eines sulfidierbaren Katalysators, enthaltend mindestens ein Metall oder Metalloxid, durch

(a) Zusammenbringen des Katalysators mit mindestens einer Schwefelverbindung unter solchen Bedingungen, um mindestens einen Teil der Schwefelverbindung in die Poren des Katalysators durch Imprägnieren einzubringen, und

(b) vor, gleichzeitig, mit oder anschließend an die Stufe (a), Zusammenbringen der Katalysatorteilchen mit dem mindestens einen sauerstoffhaltigen Kohlenwasserstoff.

**15.** Verfahren nach Anspruch 13 oder 14, wobei der Kohlenwasserstoff ein solcher ist, wie in den Ansprüchen 2 bis 7 definiert.

**16.** Verfahren zur Herstellung eines Katalysators, der zum Hydrotreating und/oder Hydrocracken eines Kohlenwasserstoffstroms oder zur Abgasbehandlung eines schwefelhaltigen Gasstroms geeignet ist, umfassend das Erhitzen einer vorsulfatisierten Masse nach Anspruch 1 auf 200 bis 500°C in Gegenwart von Wasserstoff zur Bildung von Metallsulfid.

**17.** Verfahren nach Anspruch 16, wobei der Katalysator aktiviert wird durch Erhitzen des behandelten vorsulfatisierten Katalysators in Gegenwart von Wasserstoff und mindestens einem Kohlenwasserstoff mit einem Siedepunkt von mindestens etwa 35°C bei Atmosphärendruck, bei einer Temperatur von 25 bis 430°C, einem Wasserstoffpartialdruck von 50 psig bis 3000 psig und einer Flüssigkeitsraumgeschwindigkeit pro Stunde von 0,1 bis 20 $h^{-1}$.

**18.** Verfahren nach Anspruch 17, wobei der Kohlenwasserstoff Düsentreibstoff, Kerosin, Dieselkraftstoff, Benzin, Gasöl, Rückstandsgasöl oder Kohlenwasserstoffzustrom ist.

**19.** Verfahren zum Hydrotreating und/oder Hydrocracken eines Kohlenwasserstoffstroms oder zur Abgasbehandlung eines schwefelhaltigen Gasstroms, umfassend das Zusammenbringen des Stroms in Gegenwart von Wasserstoff mit einem sulfidierten Katalysator nach Anspruch 10 oder einem, der hergestellt worden ist nach einem Verfahren nach Anspruch 16.

**20.** Verfahren nach Anspruch 19, wobei der Strom mit dem Hydrocrack-Katalysator bei einer Temperatur von 100 bis 450°C zusammengebracht wird.

**21.** Verfahren zum Transportieren eines vorsulfatisierten oder sulfidierten Katalysators, der eine Neigung zur Selbsterhitzung oder Verbrennung in Gegenwart von Luft oder Sauerstoff bei einer Temperatur von 200°C oder darunter aufweist, und wobei sich der Katalysator auf einem porösen Träger befindet, umfassend das Verfahren nach Anspruch 11, Einbringen des behandelten Katalysators in einen Behälter und anschließendes Transportieren des Behälters.

22. Verfahren nach Anspruch 20, wobei mindestens 100 kg Katalysator in den Behälter eingebracht werden.

23. Verfahren zum Entladen eines vorsulfatisierten oder -sulfidierten Katalysators, der eine Neigung zur Selbsterhitzung oder Verbrennung in Gegenwart von Luft oder Sauerstoff bei einer Temperatur von 200°C oder darunter besitzt, und wobei der Katalysator sich auf einem porösen Träger befindet, aus einem Reaktor während des Betriebs, umfassend das Abstellen des Reaktorbetriebs, das Verfahren nach Anspruch 11 und anschließende Entfernung des mit dem sauerstoffhaltigen Kohlenwasserstoff behandelten Katalysators aus dem Reaktor.

24. Verfahren nach einem der Ansprüche 19 bis 23, wobei der Kohlenwasserstoff wie in einem der Ansprüche 2 bis 7 definiert ist.

## Revendications

1. Composition comprenant un catalyseur pré-soufré ou sulfuré, déposé sur un support poreux, ce catalyseur ayant été, au moins en partie, revêtu et/ou imprégné d'au moins un hydrocarbure oxygéné qui comporte au moins 16 atomes de carbone, sous réserve que, si l'hydrocarbure oxygéné est un triglycéride d'acide gras, le catalyseur n'en a pas été revêtu et/ou imprégné avant qu'il ait subi ou pendant qu'il a subi le pré-soufrage ou la sulfuration, ce qui permet d'affaiblir les caractéristiques d'auto-chauffage de ce catalyseur.

2. Composition conforme à la revendication 1, dans laquelle l'hydrocarbure oxygéné est un acide, un ester d'acide, un alcool, une cétone, un aldéhyde ou un éther.

3. Composition conforme à la revendication 2, dans laquelle l'ester d'acide est un monoester, un diester, un triester ou un polyester d'acide gras.

4. Composition conforme à la revendication 3, dans laquelle l'ester d'acide gras est un ester d'acide gras et de glycérol, comportant de 16 à 100 atomes de carbone.

5. Composition conforme à l'une des revendications 1 à 4, dans laquelle l'hydrocarbure oxygéné comporte de 16 à 80 atomes de carbone.

6. Composition conforme à la revendication 3, 4 ou 5, dans laquelle l'ester d'acide est un ester d'acide gras saturé ou insaturé.

7. Composition conforme à la revendication 6, dans laquelle l'ester d'acide est un ester d'acide gras insaturé qui dérive de l'un des acides palmitoléique, oléique, linoléique, linolénique, élæostéarique, ricinoléique, eicosénoïque, docosénoïque, eicosatétraénoïque, eicosapentaénoïque, docosapentaénoïque et docosahexaénoïque, ou d'un de leurs mélanges, et/ou qui dérive de l'huile de soja, de l'huile de lin, de l'huile de carthame, de l'huile de tournesol, de l'huile de mais, de l'huile de coton, de l'huile d'olive, de l'huile d'abrasin, de l'huile de ricin, de l'huile de colza, du tallöl, de l'huile d'arachide, de l'huile de Canbra, de l'huile de Perilla, de résidus végétaux ou d'une huile marine, ou bien un ester d'acide gras saturé qui dérive de l'huile de coco, de l'huile de palme, du saindoux ou du suif, ou d'un des leurs mélanges.

8. Composition conforme à l'une des revendications précédentes, dans laquelle le catalyseur contient au moins un métal du groupe VIB ou du groupe VIII du Tableau Périodique ou un sulfure ou un oxyde d'un tel métal.

9. Composition conforme à la revendication 8, dans laquelle le catalyseur est supporté par de l'alumine, de la silice, de la silice-alumine, une zéolithe ou un mélange de ces supports.

10. Composition conforme à l'une des revendications 1 à 9, dans laquelle le catalyseur est un catalyseur réduit, un catalyseur d'hydrocraquage ou un catalyseur d'hydroraffinage.

11. Procédé permettant d'affaiblir les caractéristiques d'auto-chauffage d'un catalyseur pré-soufré ou sulfuré qui a tendance à s'auto-chauffer ou à brûler en présence d'air ou d'oxygène à une température inférieure ou égale à 200°C et qui est déposé sur un support poreux, lequel procédé comporte le fait de mettre ce catalyseur en contact avec au moins un hydrocarbure oxygéné qui comporte au moins 16 atomes de carbone, sous réserve que, si l'hydrocarbure oxygéné est un triglycéride d'acide gras, le catalyseur n'en a pas été revêtu et/ou imprégné avant qu'il ait subi ou pendant qu'il a subi le pré-soufrage ou la sulfuration.

12. Procédé conforme à la revendication 11, dans lequel l'hydrocarbure oxygéné est un hydrocarbure oxygéné défini dans l'une des revendications 1 à 7, et/ou le catalyseur est un catalyseur défini dans l'une des revendications 8 à 10.

13. Procédé conforme à la revendication 11 ou 12, qui comporte le fait d'effectuer le pré-soufrage de particules poreuses d'un catalyseur sulfurable contenant au moins un métal ou un oxyde de métal,

a) en mettant ce catalyseur en contact avec du soufre élémentaire, à une température telle qu'au moins une partie de ce soufre s'insinue dans les pores du catalyseur, par sublimation et/ou fusion, et
b) en mettant ces particules de catalyseur, avant, pendant ou après l'étape (a), en contact avec au moins un hydrocarbure oxygéné du type indiqué.

14. Procédé conforme à l'une des revendications 11, dans lequel l'hydrocarbure oxygéné, au nombre d'au moins un, comporte au moins 20 atomes de carbone ou est un ester d'acide gras et de glycérol, et qui comporte le fait d'effectuer le pré-soufrage de particules poreuses d'un catalyseur sulfurable contenant au moins un métal ou un oxyde de métal,

a) en mettant ce catalyseur en contact avec au moins un composé du soufre, dans des conditions telles qu'au moins une partie de ce composé du soufre s'insinue dans les pores du catalyseur, par imprégnation, et
b) en mettant ces particules de catalyseur, avant, pendant ou après l'étape (a), en contact avec au moins un hydrocarbure oxygéné du type indiqué.

15. Procédé conforme à la revendication 13 ou 14, dans lequel l'hydrocarbure oxygéné est un hydrocarbure oxygéné défini dans l'une des revendications 2 à 7.

16. Procédé de préparation d'un catalyseur approprié pour l'hydroraffinage et/ou l'hydrocraquage d'un courant d'hydrocarbures ou pour le traitement du gaz de queue d'un courant de gaz contenant du soufre, qui comporte le fait de chauffer une composition pré-soufrée, conforme à la revendication 1, à une température de 200°C à 500°C et en présence d'hydrogène, pour produire un sulfure de métal.

17. Procédé conforme à la revendication 16, dans lequel on active le catalyseur en chauffant ce catalyseur pré-soufré et traité, en présence d'hydrogène et d'au moins un hydrocarbure dont le point d'ébullition vaut au moins 35°C sous la pression atmosphérique, à une température de 25°C à 430°C, sous une pression partielle d'hydrogène de 345 kPa à 20,7 MPa (50 à 3000 psig) et pour une vitesse spatiale horaire de liquide de 0,1 à 20 $h^{-1}$.

18. Procédé conforme à la revendication 17, dans lequel l'hydrocarbure est du carburéacteur, du kérosène, du carburant diesel, de l'essence, du gasoil, du gasoil résiduel ou un courant d'alimentation d'hydrocarbures.

19. Procédé d'hydroraffinage et/ou d'hydrocraquage d'un courant d'hydrocarbures ou de traitement du gaz de queue d'un courant de gaz contenant du soufre, qui comporte le fait de mettre le courant, en présence d'hydrogène, en contact avec un catalyseur sulfuré conforme à la revendication 10 ou avec un catalyseur préparé selon un procédé conforme à la revendication 16.

20. Procédé conforme à la revendication 19, dans lequel on met le courant en contact avec le catalyseur d'hydrocraquage à une température de 100°C à 450°C.

21. Procédé de transport d'un catalyseur pré-soufré ou sulfuré qui a tendance à s'auto-chauffer ou à brûler en présence d'air ou d'oxygène à une température inférieure ou égale à 200°C et qui est déposé sur un support poreux, lequel procédé comporte le fait de mettre en oeuvre le procédé indiqué dans la revendication 11, le fait de placer le catalyseur traité dans un conteneur et le fait de transporter ce conteneur.

22. Procédé conforme à la revendication 20, dans lequel on place dans le conteneur au moins 100 kg de catalyseur.

23. Procédé permettant de décharger, d'un réacteur en fonctionnement, un catalyseur pré-soufré ou sulfuré qui a tendance à s'auto-chauffer ou à brûler en présence d'air ou d'oxygène à une température inférieure ou égale à 200°C et qui est déposé sur un support poreux, lequel procédé comporte le fait d'interrompre le fonctionnement du réacteur, le fait de mettre en oeuvre le procédé indiqué dans la revendication 11, et le fait de retirer du réacteur le catalyseur traité par un hydrocarbure oxygéné.

24. Procédé conforme à l'une des revendications 19 à 23, dans lequel l'hydrocarbure oxygéné est du type défini dans l'une des revendications 2 à 7.